# EUROPÄISCHE PATENTSCHRIFT

(11) **EP 2 887 851 B1**
(45) Veröffentlichungstag und Bekanntmachung des Hinweises auf die Patenterteilung: **07.12.2016**
(21) Anmeldenummer: 13729309.8
(22) Anmeldetag: 10.06.2013
(51) Int. Cl.: B65D 43/06, B65D 51/24, A47J 43/25

(54) **KÜCHENGERÄT ZUM AUFSETZEN AUF EIN GEFÄSS; KÜCHENGERÄTE-SET, UMFASSEND KÜCHENGERÄT UND VERSCHIEDENE FUNKTIONSEINHEITEN**
KITCHEN APPLIANCE FOR PLACEMENT ON A VESSEL; KITCHEN APPLIANCE SET, COMPRISING KITCHEN APPLIANCE AND VARIOUS FUNCTIONAL UNITS
USTENSILE DE CUISINE À POSER SUR UN RÉCIPIENT, ENSEMBLE USTENSILE DE CUISINE COMPRENANT UN USTENSILE DE CUISINE ET DIFFÉRENTES UNITÉS FONCTIONNELLES

(30) Priorität: 27.08.2012 DE 102012107862
(43) Veröffentlichungstag der Anmeldung: 01.07.2015
(73) Patentinhaber: Fissler GmbH, 55743 Idar-Oberstein (DE)
(72) Erfinder: THELEN, Arno, 55743 Idar-Oberstein (DE); HILLENMEIER, Andreas, 55218 Ingelheim (DE)
(74) Vertreter: Patentanwälte Bauer Vorberg Kayser
(86) Internationale Anmeldenummer: PCT/EP2013/061887
(87) Internationale Veröffentlichungsnummer: WO 2014/032824

(56) Entgegenhaltungen:
- DE-A1- 3 604 477
- US-A- 2 601 087
- US-A- 2 741 286
- US-A- 4 037 793

## Beschreibung

Die Erfindung betrifft ein Küchengerät zum Aufsetzen auf Gefäße mit einem im Wesentlichen runden Öffnungsrand, umfassend einen Grundkörper mit einer Aussparung, in welche wenigstens eine Art von Funktionseinheit temporär einbringbar ist. In die Aussparung können somit auswechselbare Funktionseinheiten für die Vorbereitung und Verarbeitung von Lebensmitteln eingesetzt werden, wobei es sich beispielsweise um Hobel, Reiben, etc. handeln kann. Die Erfindung betrifft daher auch ein Küchengeräte-Set, umfassend ein solches Küchengerät und verschiedene auswechselbare Funktionseinheiten. Die beispielsweise mit dem Küchengerät zerkleinerten Lebensmittel wie Obst und Gemüse fallen dann von der jeweiligen Funktionseinheit direkt hinab in das darunter befindliche Gefäß. Bei vorteilhaften Ausführungsformen kann das Küchengerät gleichzeitig auch als Deckel für das Gefäß genutzt werden.

Beispielsweise offenbart die Patentschrift DE 37 19 649 C2 ein Küchengerät, das gleichzeitig auch als Deckel für ein Gefäß mit rundem Öffnungsrand genutzt werden kann. Dazu ist in einem flachen Deckel, der mit seinem Rand reibungsschlüssig auf eine Schüssel aufsetzbar ist, eine rechteckige Öffnung zur Aufnahme eines Hobels vorgesehen. Der Hobel kann jedoch auch unabhängig von dem Deckel genutzt werden, da er aus der Aussparung entnommen werden kann. Die Aussparung könnte dann mit einer Platte verschlossen werden, um den Deckel als reinen Deckel für ein Gefäß zu nutzen, in das ein Lebensmittel beispielsweise vorher hinein gehobelt wurde.

Aus der US 2 741 286 A und der US 2 601 087 A gehen Reiben hervor, weiche auf einer Schüssel befestigt werden können, so dass geriebenes Gut in die Schüssel fällt. Weiterhin können in diesen Reiben verschiedene Reibeinsätze verwendet beziehungsweise je nach Verwendung ausgewechselt werden.

Diese und andere solcher bekannten Küchengeräte haben jedoch den Nachteil, dass sie jeweils nur auf einen bestimmten Durchmesser des Gefäßes ausgerichtet sind, mit dem sie verwendet werden sollen, denn es müssen Mittel vorgesehen werden, um den Deckel bei der Zubereitung der Lebensmittel auf dem Gefäß zu halten. Beispielsweise darf der Deckel nicht verrutschen, wenn ein Lebensmittel mit Kraft und Druck horizontal auf einem Hobel bewegt wird. Hierzu werden üblicherweise mechanische Elemente vorgesehen, mit denen der Deckel über einen Formschluss an dem Gefäß gehalten wird. Oftmals ist der Deckel dabei mit einer Zarge versehen, die formschlüssig in den Öffnungsrand des Gefäßes eingreift und den Deckel so gegen radiales Verschieben auf dem Gefäß sichert. In einem besonderen Fall kann ein Deckel auch mit mehreren Zargen ausgestattet sein. So können diese Küchengeräte zwar gleichzeitig als Hobel, Reibe und als Deckel verwendet werden, aber sie sind immer auf die Verwendung mit Gefäßen einer bestimmten Größe oder sogar Ausformung ausgerichtet. Ferner erlauben sie keine weiteren Verwendungsmöglichkeiten.

Aufgabe der Erfindung ist es daher, ein verbessertes Küchengerät zum Aufsetzen auf Gefäße mit im Wesentlichen rundem Öffnungsrand bereitzustellen, das als Basiseinheit für den Einsatz verschiedener Arten von Funktionseinheiten genutzt werden kann. Dabei soll das Küchengerät möglichst einfach und rutschsicher auf Gefäße mit verschiedenen Durchmessern aufsetzbar sein.

Erfindungsgemäß wird diese Aufgabe durch ein Küchengerät gemäß dem unabhängigen Anspruch 1 gelöst. Vorteilhafte Weiterbildungen des Küchengerätes ergeben sich aus den Unteransprüchen 2-13. Ferner wird die Aufgabe durch ein Küchengeräte-Set gemäß dem unabhängigen Anspruch 14 gelöst. Eine vorteilhafte Ausführungsform dieses Küchengeräte-Sets ergibt sich aus dem Unteranspruch 15.

Das erfindungsgemäße Küchengerät eignet sich zum Aufsetzen auf Gefäße mit im Wesentlichen kreisrunden Öffnungsrand und umfasst einen plattenförmigen Grundkörper aus einem ersten Material mit einer Aussparung, in welche wenigstens eine Art von Funktionseinheit temporär einbringbar ist.

Erfindungsgemäß ist der Grundkörper schalenförmig ausgeformt, wodurch ein Grundkörper mit einer konkaven und einer konvexen Seite gebildet wird, und wenigstens auf der konvexen Seite des schalenförmigen Grundkörpers ist wenigstens bereichsweise eine Kontaktfläche aus einem zweiten Material angebracht. Dabei bewirkt das zweite Material der Kontaktfläche in Kontakt mit dem Material des Gefäßes eine größere Reibungskraft als das erste Material des Grundkörpers.

Das erste Material des Grundkörpers kann beispielsweise Kunststoff, Keramik oder Metall, insbesondere Edelstahl, sein. Hierbei handelt es sich um im Küchenbereich physiologisch unbedenkliche Werkstoffe, die dem Küchengerät eine geeignete Oberflächenbeschaffenheit und dabei gute Formstabilität verleihen. Allerdings könnte das Küchengerät bei direktem Kontakt zwischen dem Material des Grundkörpers und einem Gefäß, das aus einem ähnlichen Material besteht, auf dem Öffnungsrand des Gefäßes verrutschen. Dies wäre insbesondere beim Einsatz von Funktionseinheiten wie Reiben und Hobeln sehr nachteilig, da bei der Bearbeitung von Lebensmitteln wie Obst, Gemüse oder Käse mit diesen Funktionseinheiten horizontale Kräfte aufgebracht werden müssen, die das Küchengerät sonst auf dem Rand eines Gefäßes hin- und herschieben würden.

Daher ist wenigstens auf der konvexen Seite des schalenförmigen Grundkörpers des Küchengerätes eine Kontaktfläche aus einem zweiten Material ausgeformt, das in Materialpaarung mit dem Material des Gefäßes einen höheren Reibungskoeffizienten erzeugt als das Material des Grundkörpers. Die bei der Materialpaarung Kontaktfläche/Gefäß erzeugte Reibungskraft ist daher größer als bei der Materialpaarung Grundkörper/Gefäß. Das Küchengerät kann so mit seiner konvexen Unterseite auf ein Gefäß mit rundem Öffnungsrand aufgesetzt werden, wobei es in dieser Lage sicherer fixiert ist, als es ohne die Kontaktfläche der Fall wäre. Bei ausreichend großem Reibungskoeffizienten kann das Küchengerät bei den horizontalen Kräften, die insbesondere beim Reiben oder Hobeln von Lebensmitteln auftreten, sehr gut gegen ein unbeabsichtigtes Verrutschen gesichert werden.

Das zweite Material der Kontaktfläche ist dabei vorzugsweise ein Kunststoff, bei dem es sich insbesondere um einen gummiartigen Kunststoff handelt, der in Kombination mit Hartplastik, Keramik oder Edelstahl einen relativ hohen Reibungskoeffizienten hat. Hierbei können beispielsweise Silikonelastomere, Nitrilkautschuk (NBR) oder ein thermoplastisches Elastomer wie das Produkt Santoprene^{™} gewählt werden. Diese Gruppe von Materialien bewirkt in Paarung mit den genannten typischen Materialien für Gefäße im Küchenbereich einen sehr hohen Reibungskoeffizienten, so dass das Küchengerät über die wenigstens eine Kontaktfläche sicher in seiner Lage auf einem Gefäß fixiert werden kann. Ein eigenständiges Verschieben oder Verrutschen findet nicht statt. Darüber sind diese Materialien abwaschbar und hitzebeständig, so dass sie beispielsweise auch für die Spülmaschine geeignet sind.

Durch die Schalenform zumindest eines Teilbereiches des Küchengerätes kann das Gerät in diesem Bereich ferner gut auf einem im Wesentlichen kreisrunden Öffnungsrand eines Gefäßes aufliegen. Dabei hat es rundherum Kontakt zu dem Gefäß, so dass der hohe Reibwert der Kontaktfläche ebenfalls rundherum wirken kann, um das Küchengerät in einer bestimmten Lage zu fixieren. Bei Kontaktflächen aus gummiartigen Kunststoffen kann das erfindungsgemäße Küchengerät so insbesondere bei Kochvorgängen auch abdichtend auf ein Gefäß aufgesetzt werden.

Dabei müssen die Gefäße, auf welche das Küchengerät aufgesetzt wird, jedoch nicht zwingend einen vollständig kreisrunden Öffnungsrand haben, sondern sie können auch Unterbrechungen beispielsweise in Form einer Ausgussschnute aufweisen. Das Küchengerät muss ferner nicht möglichst gerade auf ein Gefäß aufgesetzt werden, sondern es kann auch leicht schräg aufgelegt werden. Die Abmessungen der Kontaktfläche an der konvexen Unterseite des Küchengerätes sind daher vorzugsweise so gewählt, dass sie auch bei Schrägstellung des Küchengerätes umlaufend Kontakt mit einem Gefäßrand haben kann. Wird die jeweilige Kontaktfläche in ihrer radialen Ausdehnung sehr groß ausgeführt, hat dies ferner den Vorteil, dass das Küchengerät auf Gefäße unterschiedlicher Größe aufsetzbar ist. Bei großen Gefäßen bis zu einem bestimmten Durchmesser liegt das Küchengerät dann nahe seines Umfangs auf dem Öffnungsrand des betreffenden Gefäßes auf, während es bei kleineren Gefäßen eher im mittleren Bereich seines Grundkörpers aufliegt. Beispielsweise kann die Unterseite des Grundkörpers hierzu annähernd vollständig mit der Kontaktfläche abgedeckt sein.

Der maximal mögliche Durchmesser der Gefäße wird dabei durch den Durchmesser des Grundkörpers des Küchengerätes bestimmt, während der minimal mögliche Durchmesser der Gefäße näherungsweise durch die Lage und die Größe der Aussparung vorgegeben wird, in die verschiedene Arten von Funktionseinheiten einbringbar sind. Da ein Lebensmittel mit der jeweiligen Funktionseinheit bearbeitet wird und beispielsweise in Form von Scheiben, Raspeln, Tropfen, etc. in das darunter befindliche Gefäß fällt, sollte dieses Gefäß zweckmäßigerweise wenigstens so groß sein wie die Aussparung mit der Funktionseinheit, damit das jeweilige Lebensmittel vollständig vom Gefäß aufgefangen werden kann.

Als Funktionseinheiten können beispielsweise Reiben, Hobel, Tropfautomatiken, Dampfeinsätze und/oder Saftpressen eingesetzt werden. Es ist jedoch auch möglich, das Küchengerät ohne eingesetzte Funktionseinheit als Deckel für ein Gefäß zu nutzen, wobei durch die Aussparung Sicht und Zugriff auf die im Gefäß befindlichen Lebensmittel besteht. In dieser Nutzungsform könnte beispielsweise ein Mixer durch die Aussparung geführt werden, um das Küchengerät als Spritzschutz für herumwirbelnde Lebensmittelteile zu nutzen. Auch als Spritzschutz auf einer Pfanne könnte das Küchengerät ohne eingesetzte Funktionseinheit verwendet werden.

Es kann ferner eine Verschlussplatte in die Aussparung eingesetzt werden, so dass sich ein geschlossener Deckel ergibt. Dieser kann ebenfalls als Spritzschutz dienen und auch für einen Kochvorgang auf Kochtöpfe oder Pfannen aufgesetzt werden. Die Verschlussplatte kann dabei transparent oder undurchsichtig sein. Eine transparente Verschlussplatte würde erneut die Sicht auf darunter befindliche Lebensmittel ermöglichen. Mit einer Verschlussplatte in der Aussparung könnte das Küchengerät aber auch einfach als Schale oder Aufbewahrung für Lebensmittel wie Obst und Gemüse genutzt werden.

Dabei weist das Küchengerät an seiner konvexen Seite vorzugsweise keine Formelemente zum Positionieren des Gerätes auf einem Gefäß auf. Es müssen somit keine Elemente wie Zargen, Vorsprünge, Anschläge oder Rillen vorhanden sein, mit denen das Küchengerät in einer bestimmten radialen Lage gegenüber dem Gefäß positionierbar ist. Die Fixierung des Küchengerätes gegenüber dem Gefäß erfolgt vorzugsweise ausschließlich über die Reibung zwischen dem Öffnungsrand des Gefäßes und der Kontaktfläche des Küchengerätes.

Die Schalenform des Grundkörpers kann dabei auf verschiedene Arten erreicht werden. Beispielsweise ist der Grundkörper in wenigstens einem ersten Teilbereich gewölbt oder kegelförmig, wodurch die konkave und die konvexe Seite des Grundkörpers gebildet werden. Bei einem gewölbten Grundkörper handelt es sich somit eher um eine bauchige Schale, während die Kegelform zur Mitte hin abfallende gerade Wände beinhaltet.

Ein gewölbter Grundkörper wird dabei vorzugsweise durch den gekrümmten Teil der Oberfläche eines Kugelsegments gebildet, wobei dieses Kugelsegment bzw. dieser Kugelabschnitt durch den Schnitt einer Ebene mit einer Kugel entsteht (Kugelkappe /Kugelkalotte). Ein solcher gewölbter Grundkörper wird daher im Folgenden auch als kugelabschnittsförmig bezeichnet, wobei der Radius des kugelabschnittsförmigen Grundkörpers entsprechend gewählt ist und auch sehr groß sein kann, so dass annähernd eine kegelförmige Form erreicht wird. Allerdings hat sich die Kugelabschnittsform als besonders vorteilhaft erwiesen, da sie beim Auflegen des Küchengerätes auf ein Gefäß mit kreisrundem Öffnungsrand eine stets optimale Anlagefläche zu dem jeweiligen Gefäß bewirkt. Auch beim Drehen des Küchengerätes um einen imaginären Drehpunkt bzw. beim außermittigen Verschieben des Küchengerätes auf dem Gefäß bleibt diese optimale Anlagefläche erhalten, was insbesondere für ein Küchengerät mit Abdichtfunktion von wesentlicher Bedeutung ist.

Die Aussparung kann dann direkt in den gewölbten oder kegelförmigen ersten Teilbereich des Grundkörpers eingebracht sein, aber in einem Ausführungsbeispiel der Erfindung ist der Grundkörper in wenigstens einem zweiten Teilbereich eben, wobei der erste Teilbereich diesen ebenen zweiten Teilbereich ringförmig umschließt. Die Aussparung ist dann in dem ebenen zweiten Teilbereich ausgeformt. Im Zentrum der Schale ist somit eine ebene Bodenfläche angeordnet, in der sich vorzugsweise die Aussparung befindet. Dies hat den Vorteil, dass die Funktionseinheiten nicht in eine schräge Fläche eingesetzt werden, sondern in eine ebene Fläche. Insbesondere Reiben, Hobel und/oder Verschlussplatten können somit auch mit ebener Oberseite ausgeführt werden, um bündig in den Grundkörper eingefügt werden zu können. Die Aussparung in der Mitte und somit am tiefsten Punkt des Küchengerätes hat dabei insbesondere auch den Vorteil, dass Lebensmittel und insbesondere Flüssigkeiten automatisch in Richtung der Aussparung rutschen oder sogar fließen.

Doch nicht nur in seinem Zentrum kann der Grundkörper eben ausgeführt sein, sondern auch am Außenrand des ersten Teilbereiches können ebene oder anderweitig ausgeformte Bereiche vorgesehen sein. Beispielsweise kann es einen außen umlaufenden ebenen Rand geben oder am Rand sind Haken und/oder Ringe ausgeformt, um das Küchengerät aufhängen zu können. In einem Ausführungsbeispiel der Erfindung ist der Umfang des Grundkörpers jedoch kreisrund und der erste Teilbereich reicht bis an den Umfang des Grundkörpers heran.

Um Funktionseinheiten einfach und sicher einsetzen zu können, kann die Aussparung von wenigstens einer Seitenwand umschlossen sein, die auf der konvexen Seite des Grundkörpers herausragt. So bildet sich eine Aufnahme mit ausreichender Seitenstabilität, und die wenigstens eine Art von Funktionseinheit ist temporär innerhalb dieser Seitenwand einbringbar. Um eine Funktionseinheit innerhalb der Aussparung zu fixieren, sind am Grundkörper Mittel zum temporären Fixieren von verschiedenen Funktionseinheiten vorgesehen. Hierbei handelt es sich insbesondere um Rastmittel im Bereich der Aussparung, die beispielsweise an der wenigstens einen Seitenwand ausgebildet sein können.

Die auf der konvexen Seite des Grundkörpers hervorragende Seitenwand hat dabei den Vorteil, dass flache Funktionseinheiten auf der konkaven Seite bündig in die Aussparung eingesetzt werden können. Falls dies nicht angestrebt wird, sondern auf der konkaven Seite des Grundkörpers Vorsprünge und/oder Absätze vorhanden sein dürfen, kann eine solche Seitenwand jedoch auch auf der konkaven Seite herausragen. In einem weiteren Ausführungsbeispiel kann auf die Seitenwand verzichtet werden, wobei dann andere Mittel vorgesehen sein können, um eine Funktionseinheit temporär innerhalb der Aussparung zu fixieren. Insbesondere können auch an der Funktionseinheit selbst Mittel vorhanden sein, mit denen die Funktionseinheit in die Aussparung eingerastet werden kann. Hierbei handelt es sich beispielsweise um federbelastete Kugeln, die beim Einbringen einer Funktionseinheit durch den Rand der Aussparung soweit in Versenkungen gedrückt werden, dass die Funktionseinheit in die Aussparung hineingedrückt werden kann. Sobald die Kugeln den Rand der Aussparung passiert haben, bewegen sie sich durch Federkraft zurück in ihre Ausgangslage und rasten unterhalb des Rands der Aussparung ein. Diese Art des Befestigungsmittels kann jedoch auch mit umlaufenden Seitenwänden oder sonstigen Elementen an der Aussparung kombiniert werden, so dass die Kugeln mit Öffnungen oder Nuten innerhalb dieser Elemente verrasten.

Größe und Anordnung der wenigstens einen Kontaktfläche aus einem Material mit hohem Reibungskoeffizienten können verschieden gewählt werden. Beispielsweise können auf der konvexen Seite des schalenförmigen Teilbereiches mehrere Kontaktflächen getrennt voneinander so angebracht sein, dass sie einen vom ersten Material des Grundkörpers unterbrochenen Ring bilden. Hierbei sollten die einzelnen Kontaktflächen so angeordnet sein, dass das Küchengerät dennoch stabil auf dem Öffnungsrand eines Gefäßes aufgesetzt werden kann. Hierzu bieten sich wenigstens drei Kontaktflächen an, die in einem Winkel von 120° zueinander auf einem Kreis angeordnet sind. Das Küchengerät liegt dann zwar nur auf diesen Kontaktflächen auf dem Öffnungsrand eines Gefäßes auf, dies kann aber je nach gewähltem Material und der Breite der Kontaktflächen für eine rutschfeste Fixierung ausreichen. Diese Ausführungsform bedingt jedoch, dass auf eine Abdichtfunktion des Küchengerätes auf dem Küchengefäß verzichtet wird, da insbesondere Dampf und/oder Flüssigkeiten aus den Spalten zwischen den einzelnen Kontaktflächen entweichen können.

In einem weiteren Ausführungsbeispiel der Erfindung ist wenigstens eine Kontaktfläche durch einen durchgehend umlaufenden Ring gebildet. Mit einem solchen Ring liegt das Küchengerät vollständig auf dem Öffnungsrand eines Gefäßes auf, was durch die Vergrößerung der Auflagefläche die Sicherheit gegen Verrutschen weiter erhöht und auch eine Dichtigkeit ermöglicht. Damit das Küchengerät vorzugsweise auf Gefäße unterschiedlicher Größe aufsetzbar ist, ist dieser umlaufende Ring so breit, dass das Küchengerät bei kleinen und großen Gefäßen immer mit der ringförmigen Kontaktfläche auf dem Gefäßrand aufliegt.

In einem Ausführungsbeispiel der Erfindung erstreckt sich wenigstens eine Kontaktfläche von der konvexen Seite des Grundkörpers über den Rand des Grundkörpers auf die konkave Seite des Grundkörpers. Die Kontaktfläche umschließt dabei den Rand des Grundkörpers und bildet so einen U-förmigen Randschutz aus. Dabei kann der Ring den Rand umlaufend vollständig umschließen oder sich nur bereichsweise auf die konkave Seite hin erstrecken.

Ferner kann in dieser Ausführungsform an dem umlaufenden Ring auf der konkaven Seite des Grundkörpers wenigstens eine Greiflasche ausbildet sein, indem der Ring bereichsweise in Richtung Mittelpunkt des Grundkörpers verbreitert ist. Der Ring kann jedoch alternativ oder ergänzend auch eine bereichsweise Verdickung auf der konkaven Seite des Grundkörpers aufweisen. Beispielsweise können so auf der konkaven Seite des Grundkörpers zwei gegenüber liegende Greiflaschen ausgeformt sein. An diesen Greiflaschen kann das Küchengerät sicher gegriffen werden, da durch die Kontaktfläche gewährleistet ist, dass die Finger eines Benutzers nicht am Material des Grundkörpers abrutschen. Ferner können die Greiflaschen bei Benutzung des Küchengerätes als Deckel für einen Kochtopf oder eine Pfanne einen Hitzeschutz bieten, da der beim Kochvorgang heiß werdende Grundkörper nicht direkt angefasst werden muss. Bei Materialen wie Silikonelastomeren oder NBR haben die Greiflaschen typischerweise einen höheren Wärmeleitwiderstand als der Grundkörper, so dass das Küchengerät an den Greiflaschen gegriffen werden kann, ohne dass es zu Verbrennungen an den Fingern eines Benutzers kommt. Bei einer Kontaktfläche, welche den Rand des Grundkörpers vollständig umschließt, sind Benutzer auch gegen Verbrennungen am Rand des Küchengerätes geschützt.

Von der Erfindung umfasst ist auch ein Küchengeräte-Set, das ein Küchengerät gemäß einer der beschriebenen Ausführungsformen und wenigstens eine Funktionseinheit umfasst, welche temporär in die Aussparung des Küchengerätes einbringbar ist. Die Form und Größe der Aussparung und der verschiedenen Funktionseinheiten sind daher aufeinander abgestimmt und das Küchengerät bietet für diverse Funktionseinheiten spezifische Vorteile.

Die eingesetzte Funktionseinheit kann beispielsweise eine Reibe, ein Hobel, eine Tropfautomatik, ein Dampfeinsatz, eine Saftpresse und/oder eine Verschlussplatte sein. Wie bereits erwähnt, bietet das erfindungsgemäße Küchengerät durch seine Ausgestaltung bei Reiben und Hobeln insbesondere den Vorteil, dass das Küchengerät rutschsicher auf ein Gefäß aufsetzbar ist. Auch bei starken horizontalen Bewegungen von Lebensmitteln wie Obst, Gemüse oder Käse beispielsweise auf einer Reibe verrutscht das Küchengerät nicht und kann so einfach und sicher benutzt werden. Durch einen relativ großen "Radius" des auf einer Seite konkaven Küchengerätes bildet sich ferner eine geeignete Arbeitsfläche auch außerhalb der eingesetzten Funktionseinheit aus, so dass das jeweilige Lebensmittel mit vertikalem Druck in der flachen Schale hin- und hergeschoben werden kann und dabei immer wieder beispielsweise über die Schneidklingen einer Reibe geführt wird. Dazu ist eine Reibe vorzugsweise bündig in die Aussparung eingesetzt, so dass die Reibe und die Oberfläche der konkaven Seite des Grundkörpers eine annähernd durchgehende Fläche bilden, aus der lediglich die Schneidklinge der Reibe herausragt. Das Gleiche gilt für Hobel oder sonstige Funktionseinheiten zum Zerkleinern von Lebensmitteln.

Nach Zerkleinerung eines Lebensmittels kann die jeweils benutzte Funktionseinheit aus der Aussparung entnommen werden und Lebensmittelreste, die sich in der Schale angesammelt haben, können auf einfache Weise in Richtung der Aussparung geschoben und durch diese in das Gefäß geführt werden. Das Gleiche gilt für Funktionseinheiten wie Saftpressen. Diese werden zwar nicht bündig in die Aussparung eingesetzt, sondern ragen auf der konkaven Seite des Küchengerätes heraus. Nach dem Entsaftungsprozess können sie jedoch ebenfalls entfernt werden und Saft, der nicht gleich in das Gefäß geflossen ist, sondern sich in der Schale gesammelt hat, kann durch die Aussparung in das Gefäß fließen. Hierdurch geht so wenig Flüssigkeit wie möglich verloren.

Mit einer Tropfautomatik kann beispielsweise Wein dosiert dem Inhalt eines Topfes zuführt werden, wobei eine solche Tropfautomatik ebenfalls auf der konkaven Seite des Küchengerätes herausragt. Ein Dampfeinsatz kann dagegen bündig in die Aussparung eingesetzt werden, so dass das zu dünstende Lebensmittel in dem schalenförmigen Grundkörper des Küchengerätes verteilt werden kann. In dem Gefäß unterhalb des Küchengerätes wird dann Wasser erhitzt, so dass Wasserdampf durch den Dampfeinsatz zu dem Gargut strömen kann. Eventuell kann ergänzend ein Deckel vorgesehen sein, mit dem das Gargut abgedeckt wird, um den Wasserdampf im Bereich des Garguts zu halten. Auch bei diesem Einsatz des Küchengerätes ist es vorteilhaft, dass das Küchengerät am Umfang mit der Kontaktfläche dicht auf ein Gefäß aufsetzbar ist, da der Wasserdampf dann nicht durch Spalte zwischen dem Gefäß und dem Aufsatz entweichen kann, sondern durch die Öffnungen des Dampfeinsatzes strömt.

Hiermit ergibt sich für den Nutzer mit minimalem Materialeinsatz ein sehr vielseitiges Spektrum der Einsetzbarkeit. Darüber hinaus ist das erfindungsgemäße Küchengerät trotz seiner vielen Einsatzmöglichkeiten einfach in der Handhabung und auch leicht zu reinigen. Das scheibenförmige Küchengerät kann hochkant wie ein Teller in die Spülmaschine gestellt werden und weist keine unzugänglichen Spalte, Ritzen, Aushöhlungen, etc. auf, in denen sich Lebensmittelreste so ungünstig sammeln können, dass sie nur schwer zu entfernen sind. Die verwendeten Funktionseinheiten können getrennt von dem Küchengerät ebenfalls in der Spülmaschine gereinigt werden.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1a: eine erste dreidimensionale Aufsicht auf ein Ausführungsbeispiel des erfindungsgemäßen Küchengerätes ohne eingesetzte Funktionseinheit;
- Fig. 1b: eine dreidimensionale Untersicht auf ein Küchengerät gemäß Fig. 1a;
- Fig. 1c: eine zweite dreidimensionale Aufsicht auf ein Ausführungsbeispiel des erfindungsgemäßen Küchengerätes mit eingesetzter Funktionseinheit (Reibe);
- Fig. 2a: einen Querschnitt durch ein Gefäß erster Größe mit einem aufgesetzten Küchengerät gemäß einer ersten Ausführungsform;
- Fig. 2b: einen Querschnitt durch ein Gefäß erster Größe mit einem aufgesetzten Küchengerät gemäß einer zweiten Ausführungsform;
- Fig. 3: einen Querschnitt durch ein Gefäß zweiter Größe mit einem aufgesetzten Küchengerät;
- Fig. 4: eine vergrößerte Detailansicht des Kontaktes zwischen der Kontaktfläche des Küchengerätes und dem Öffnungsrand eines Gefäßes;
- Fig. 5: eine dreidimensionale Ansicht eines Gefäßes mit aufgesetztem Küchengerät mit eingesetzter Funktionseinheit; und
- Fig. 6: einen Querschnitt durch ein Gefäß mit schräg aufgesetztem Küchengerät und Ausgussspalt.

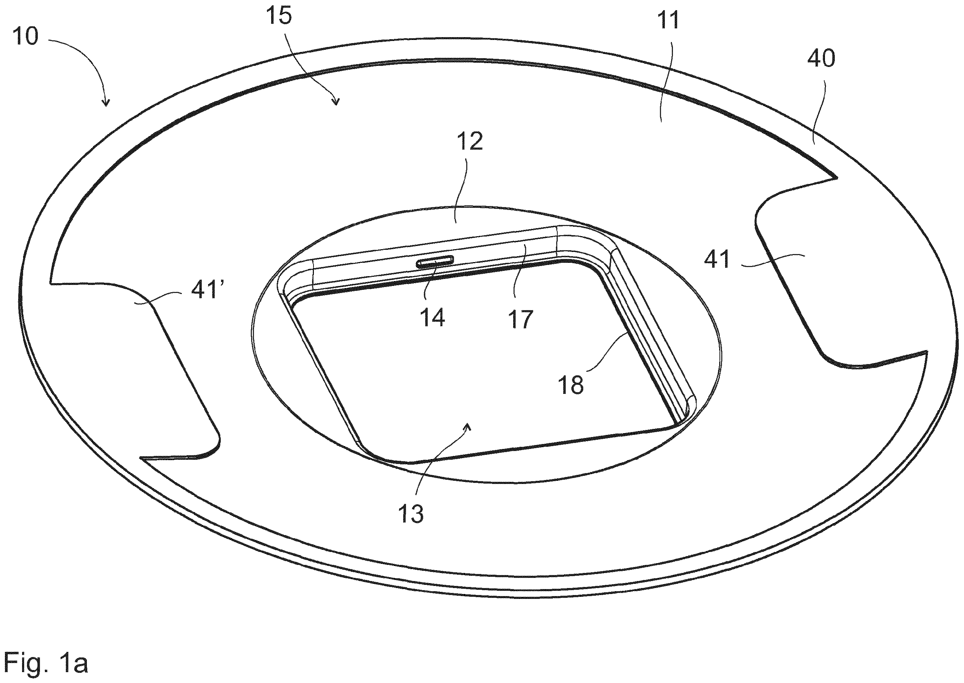

In Fig. 1a ist ein Ausführungsbeispiel des erfindungsgemäßen Küchengerätes 10 in einer ersten dreidimensionalen Ansicht gezeigt. Das Küchengerät 10 wird im Wesentlichen durch einen plattenförmigen, kreisrunden Grundkörper 15 gebildet, der schalenförmig ausgeformt ist. So ergeben sich eine konkave und eine konvexe Seite des Grundkörpers, wobei das Küchengerät 10 dazu ausgebildet ist, mit der konvexen Seite auf ein Gefäß mit einem im Wesentlichen kreisrunden Öffnungsrand aufgesetzt zu werden.

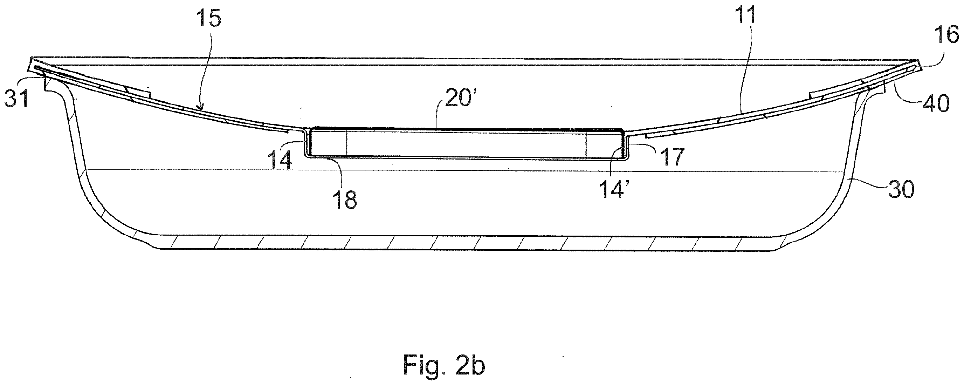

In den Ausführungsbeispielen der Figuren wird die Schalenform des Küchengerätes 10 durch einen wenigstens bereichsweise kugelabschnittsförmigen Grundkörper 15 erreicht. Allerdings ist der Grundkörper 15 dabei wie eine sehr flache Schale ausgeführt, wobei der Radius des Kugelabschnitts so groß ist, dass sich die Form des Grundkörpers 15 in den Figuren annähernd als kegelförmig darstellt. Eine so flache Schale hat den Vorteil, dass die konvexe Unterseite des Küchengerätes 10 beim Aufsetzen auf ein Gefäß mit sehr großem Öffnungsrand nicht so tief in das Gefäß hineinragt, dass es den Raum für das von oben aufzunehmende Lebensmittel zu stark verkleinert. Lediglich in Fig. 2b ist eine Ausführungsform mit einem kleineren Radius dargestellt, in welcher die vorteilhafte Kugelabschnittsform deutlicher zu erkennen.

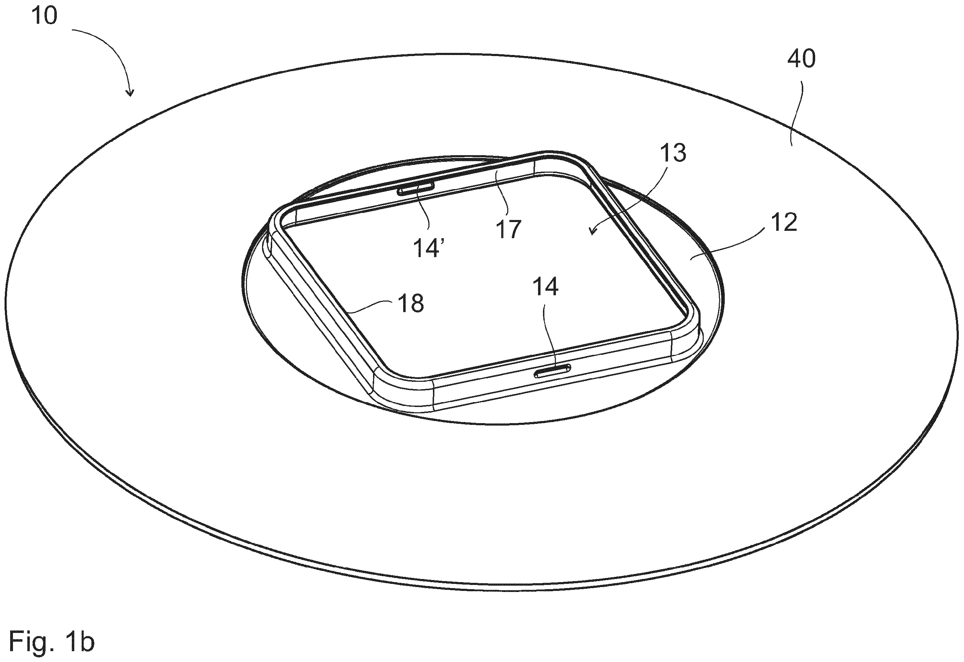

Im Zentrum des Grundkörpers 15 ist eine Aussparung 13 vorgesehen, die von wenigstens einer Seitenwand 17 umschlossen ist, die auf der konvexen Seite des Küchengerätes 10 herausragt. Dies ist auch der Untersicht der Fig. 1b zu entnehmen. Der Grundkörper 15 ist im Bereich der Aussparung 13 jedoch nicht kugelabschnittsförmig, sondern eben ausgeführt. Ein kugelabschnittsförmiger Teilbereich 11 des Grundkörpers 15 umgibt diesen ebenen Teilbereich 12 somit ringförmig, so dass durch die beiden Teilbereiche 11 und 12 eine flache Schale mit einem ebenen Boden gebildet wird.

Der ebene Teilbereich 12 des Grundkörpers 15 ist beispielsweise rund ausgeführt. In diesem ebenen Teilbereich 12 ist eine rechteckige Aussparung 13 ausgeformt, die jedoch abgerundete Ecken hat. Diese Abrundung der Ecken verhindert scharfe Kanten und erleichtert die Reinigung des Küchengerätes. Auch der Übergang von dem ebenen Teilbereich 12 in die Seitenwand 17 der Aussparung 13 ist abgerundet ausgebildet. Die Aussparung 13 kann jedoch auch jegliche andere Formen haben und beispielsweise auch kreisrund, oval, etc. ausgeführt sein.

In die Aussparung 13 ist eine jeweilige Funktionseinheit einbringbar (nicht dargestellt), wobei der Grundkörper 15 Mittel zur temporären Fixierung der Funktionseinheit an dem Grundkörper 15 aufweist. Dabei handelt es sich beispielsweise um Rastmittel, wobei in dem dargestellten Ausführungsbeispiel an gegenüber liegenden Seiten jeweils eine Rastnase oder Rastwulst 14 auf der Innenfläche der Seitenwand 17 ausgeformt ist. Diese Rastwulst 14 ragt in das Innere der Aussparung 13 hinein und der komplementär ausgeformte Bereich einer Funktionseinheit ist entsprechend so ausgeführt, dass er unter Druck in die Rastwulst 14 einrastet. So wird eine Funktionseinheit in der Aussparung 13 gehalten, kann aber durch Aufbringung einer bestimmten Zugkraft von oben bzw. einer Druckkraft von unten auch wieder aus der Aussparung 13 herausgezogen bzw. -gedrückt werden.

Es können jedoch auch jegliche andere Mittel zur Fixierung von Funktionseinheiten innerhalb oder zumindest im Bereich der Aussparung 13 vorgesehen sein. Beispielsweise kann es sich um Bohrungen, Nuten, Laschen, Schlitze, Stifte, Haken, etc. handeln, die mit entsprechenden Elementen an den Funktionseinheiten zusammenwirken. Allerdings sind Befestigungsmittel an der umlaufenden Seitenwand 17 der Aussparung besonders vorteilhaft, da sie die Oberfläche des ebenen Teilbereiches 12 nicht verändern und so beispielsweise Reib- und Hobelvorgänge nicht behindern. Auch der Einsatz von Bajonettverschlüssen ist insbesondere bei kreisrunden Aussparungen möglich, wobei eine ebenfalls kreisrunde Funktionseinheit dann in die Aussparung eingesetzt und so gedreht werden kann, dass der Bajonettverschluss verriegelt.

Der Grundkörper 15 kann aus verschiedenen Materialien geformt sein, wobei insbesondere Kunststoffe wie Hartplastik, Metall und Keramik in Frage kommen. In einem Ausführungsbeispiel der Erfindung kommt Edelstahl zur Anwendung, da dies im Küchenbereich physiologisch unbedenklich ist und dem Küchengerät eine gute Formstabilität bietet. Ferner können die unterschiedlichen Teilbereiche 11 und 12 des Grundkörpers 15 und die Aussparung 13 aus Edelstahl relativ einfach ausgeformt werden.

Ein wesentlicher Aspekt der Erfindung ist die wenigstens eine Kontaktfläche 40 wenigstens an der Unterseite, d.h. an der konvexen Seite, des Grundkörpers 15. In dem in Fig. 1a dargestellten Ausführungsbeispiel handelt es sich hierbei um einen vollständig umlaufenden Ring 40, der sich von der konvexen Seite über den Umfang auf die konkave Seite des Grundkörpers 15 erstreckt. Er umschließt des Rand 16 somit U-förmig und liegt dabei überall flächig am Grundkörper 15 an.

Als Material für die Kontaktfläche 40 wird vorzugsweise ein gummiartiger Kunststoff wie ein Silikonelastomer oder Nitrilkautschuk gewählt. Auch ein thermoplastisches Elastomer wie das Produkt Santoprene™ wäre geeignet. Diese Materialien bieten als Materialpaarung zusammen mit typischen Materialien für Gefäße im Küchenbereich einen hohen Reibungskoeffizienten und sind zur Ausbildung einer Kontakt- bzw. Reibfläche besonders geeignet. Ferner kann eine solche Kontaktfläche über bekannte Fertigungstechniken wie Spritz- und Pressverfahren an dem Grundkörper 15 angebracht werden. Ergänzend oder alternativ sind auch mechanische Verbindungen möglich.

Vorzugsweise reicht die Kontaktfläche 40 beispielsweise in Form eines Silikonrings dabei auf der konvexen Seite des Grundkörpers 15 fast bis an den ebenen Teilbereich 12 und damit die Aussparung 13 heran. Auf der konkaven Seite des Grundkörpers 15 ragt der Ring hingegen nur so weit um den Rand des Grundkörpers 15 herum, dass er ihn sicher umschließt.

Auf der konkaven Seite des Grundkörpers 15 kann der Ring 40 jedoch bereichsweise in Richtung der Mitte des Grundkörpers 15 hin verbreitert sein. Hierdurch bildet sich wenigstens eine Greiflasche aus, wie es in der Aufsicht der Fig. 1a ersichtlich ist. In diesem Ausführungsbeispiel sind durch die bereichsweise Verbreiterung des Rings 40 zwei gegenüber liegende Greiflaschen 41 und 41' ausgebildet, an denen das Küchengerät 10 von einem Benutzer gegriffen werden kann. Das Küchengerät 10 kann an diesen Stellen auch mit den Daumen nach unten auf ein Gefäß gedrückt werden.

Fig. 1b zeigt eine Untersicht auf ein Küchengerät gemäß Fig. 1a, wobei auch hier keine Funktionseinheit in die Aussparung 13 eingesetzt ist. Zu sehen ist somit der kreisrunde, ebene Teilbereich 12 des Grundkörpers, in dem die Aussparung 13 ausgeformt ist. Diesen ebenen Bereich 12 umgibt der kugelabschnittsförmige schräge Teilbereich 11, wobei der Fig. 1b zu entnehmen ist, dass dieser von unten vollständig von der Kontaktfläche 40 bedeckt ist.

Der Fig. 1b ist auch die zweite Rastwulst 14' zu entnehmen, welche der ersten Rastwulst 14 an der Innenseite der Seitenwand 17 gegenüber liegt. Die Seitenwand 17 ragt auf der Unterseite des Küchengerätes 10 aus dem schalenförmigen Grundkörper heraus, und im Ausführungsbeispiel der Fig. 1b ist der Rand 18 der Seitenwand 17 nach innen gebogen ausgeführt. Hierdurch ergibt sich eine Auflage- bzw. Anschlagfläche für die von der anderen Seite eingedrückte Funktionseinheit. Ferner werden so erneut scharfe Kanten vermieden, die ansonsten zu Verletzungen führen könnten.

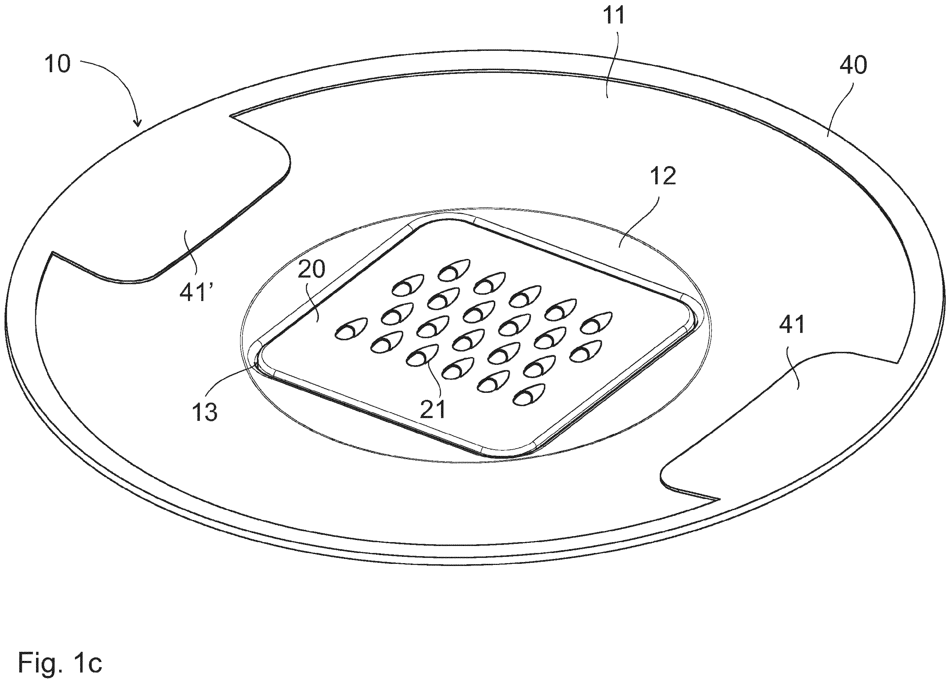

Fig. 1c zeigt eine dreidimensionale Aufsicht auf ein Küchengerät 10 mit einer eingesetzten Funktionseinheit, wobei es sich um eine Reibe 20 mit mehreren Schneidklingen 21 handelt. Die Reibe 20 ist wie die Aussparung 13 rechteckig mit abgerundeten Kanten ausgeführt und ist bündig in die Aussparung 13 eingesetzt, so dass sie zusammen mit dem ebenen Teilbereich 12 eine durchgehende Fläche bildet, aus der lediglich die Schneidkanten 21 herausragen. Das Küchengerät 10 kann nun auf ein Gefäß aufgesetzt werden und von einem Benutzer eventuell mit einer Hand an einer Greiflasche 41, 41' gehalten werden, während er mit der anderen Hand Obst, Gemüse oder Käse über die Reibe 20 führt. Das so abgeriebene Lebensmittel fällt dann auf der Unterseite herunter in das betreffende Gefäß.

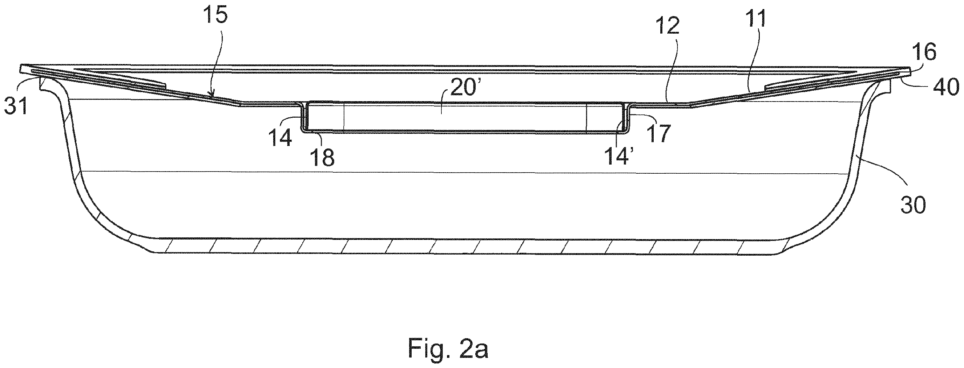

Fig. 2a zeigt das auf ein Gefäß 30 aufgesetzte Küchengerät 10 in einem Querschnitt, wobei es sich um ein Gefäß 30 mit einem relativ großen Durchmesser handelt. Beispielsweise kann es sich hierbei um eine Pfanne handeln. Das Küchengerät 10 liegt mit seiner ringförmigen Kontaktfläche 40 auf dem Öffnungsrand 31 des Gefäßes 30 auf, wobei dies im äußeren Bereich stattfindet. Die Kontaktfläche 40 erstreckt sich dabei auf der konvexen Unterseite des Grundkörpers 15 von dem ebenen Teilbereich 12 über den kugelabschnittsförmigen bzw. kegelförmigen Teilbereich 11 und über den äußeren Rand 16 des Grundkörpers 15 bis auf die konkave Oberseite des Grundkörpers 15, so dass die Kontaktfläche 40 den Umfang 16 des Grundkörpers U-förmig umschließt.

In die Aussparung im ebenen Teilbereich 12 ist als Funktionseinheit eine Verschlussplatte 20' eingefügt, die bündig in die Oberfläche des Grundkörpers 15 bzw. des ebenen Teilbereiches 12 eingelassen ist. Dabei sind Elemente der Verschlussplatte 20' formschlüssig in die beiden Rastwulste 14 und 14' eingerastet, so dass die Verschlussplatte 20' in der Aussparung gehalten ist und auf dem nach innen gebogenen Rand 18 der Seitenwand 17 aufliegt. Die Oberseite der Verschlussplatte 20' bildet mit der Innenfläche des Grundkörpers 15 eine annähernd ebene Fläche. In dieser Anwendung des Küchengerätes 10 kann dieses beispielsweise als Deckel und/oder Spritzschutz für das Gefäß 30 benutzt werden. Dabei kann das Küchengerät 10 mit der Kontaktfläche rundherum auf dem Öffnungsrand 31 des Gefäßes 30 aufliegen und auch abdichten.

Fig. 2b zeigt das gleiche Gefäß mit einem aufgesetzten Küchengerät, bei dem die Kugelabschnittsform des ersten Teilbereiches 11 des Grundkörpers 15 aufgrund eines kleineren Radius deutlicher zu erkennen ist. Der Radius sollte jedoch auch nicht so klein gewählt werden, dass das Küchengerät 10 bei derartig großen Gefäßen zu weit in das Innere des Gefäßes 30 ragt und sogar darin befindliche Lebensmittel berührt. Ferner ragt der kugelabschnittsförmige Teilbereich 11 in dieser Ausführungsform direkt bis an die Aussparung 13 heran, so dass kein ebener zweiter Teilbereich ausgeformt ist.

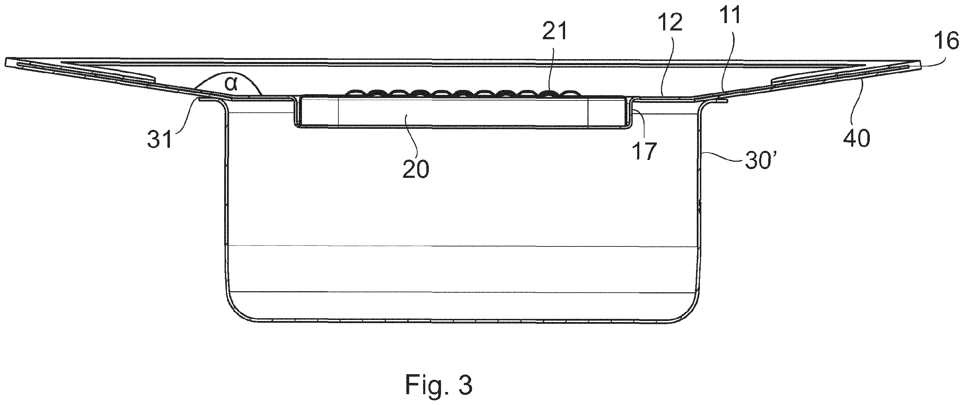

Der Fig. 3 ist eine Anwendung zu entnehmen, bei der erneut eine Funktionseinheit in Form einer Reibe 20 mit einer Schneidkante 21 in die Aussparung 13 eingebracht ist. Der Grundkörper der Reibe 20 ist ebenfalls bündig mit der Innenseite des Grundkörpers 15 in die Aussparung 13 eingelassen, aber wenigstens eine Schneidkante 21 der Reibe 20 ragt aus dieser Ebene heraus. So kann Obst, Gemüse und/oder Käse mit Druck innerhalb der Schale hin- und her bewegt werden, wobei Teile des jeweiligen Lebensmittels durch die Schneidkante 21 abgetrennt werden und nach unten in das Gefäß 30' fallen. Dabei kann das jeweilige Lebensmittel über den ebenen Bereich 12 hinaus auch innerhalb des schrägen Bereiches 11 bewegt werden, wobei der Winkel α zwischen dem schrägen Bereich 11 und dem ebenen Bereich 12 auf der konkaven Seite des Grundkörpers 15 sehr groß gewählt ist, um einen möglichst glatten Übergang zwischen den beiden Bereichen bereitzustellen.

Das Küchengerät 10 ist in Fig. 3 auf ein Gefäß 30' mit einem relativ kleinen Durchmesser aufgesetzt, aber das erfindungsgemäße Küchengerät 10 kann auch auf diese Gefäßgröße sicher aufgesetzt und positioniert werden, da die Kontaktfläche 40 die konvexe Seite des Küchengerätes 10 annähernd vollständig bedeckt, so dass sich fast die gesamte Unterseite als Reibfläche mit guten Haftungseigenschaften eignet.

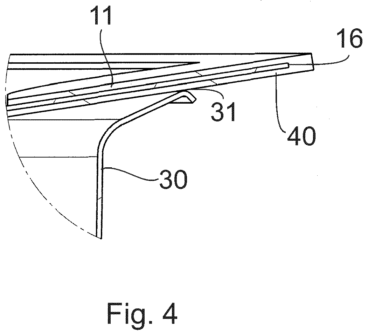

Fig. 4 zeigt dazu eine vergrößerte Ansicht des Kontaktes zwischen dem Öffnungsrand 31 eines Gefäßes 30 und der Kontaktfläche 40 des Küchengerätes 10. Dabei muss der Rand 31 des Gefäßes 30 keine spezielle Form haben, die beispielsweise an die Steigung oder den Radius des schalenförmigen Küchengerätes angepasst ist, sondern das Küchengerät 10 liegt einfach auf dem höchsten Punkt bzw. auf der höchsten umlaufenden Kante des Gefäßes 30 auf.

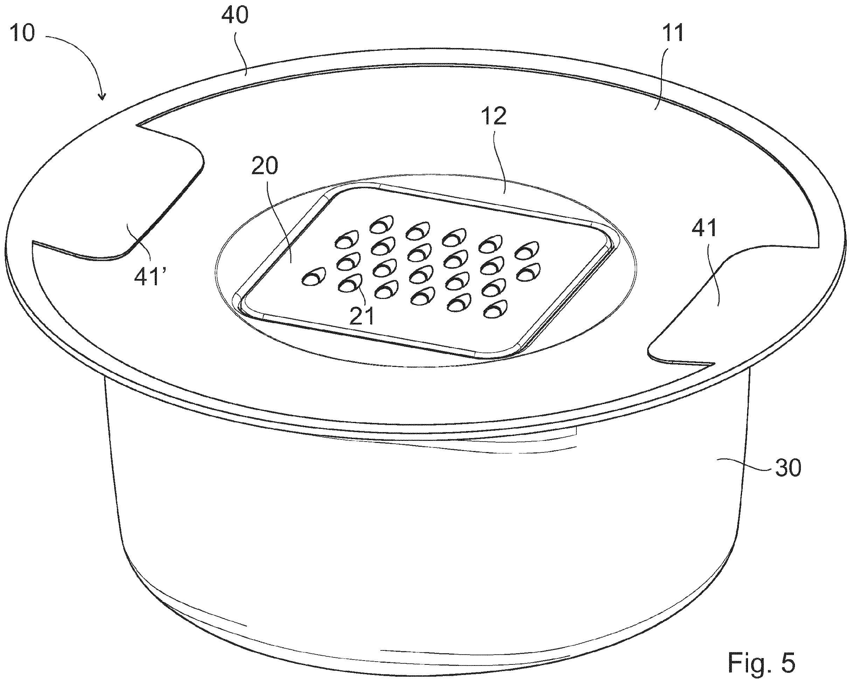

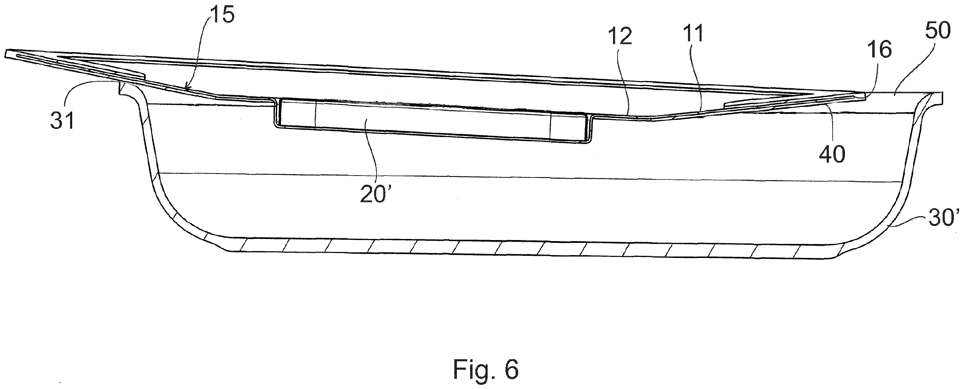

Der dreidimensionalen Ansicht der Fig. 5 ist nochmal die Anordnung des Küchengerätes 10 auf einem Gefäß 30 mittlerer Größe zu entnehmen. Dabei ist als Funktionseinheit wieder eine Reibe 20 in die Aussparung 13 eingebracht. Allerdings ist das Küchengerät 10 nicht nur in einer horizontalen Lage auf einem Gefäß gegen Verrutschen gesichert, in der das scheibenförmige Küchengerät 10 im Wesentlichen gerade und mittig auf das Gefäß aufgesetzt ist und vollständig auf dem Öffnungsrand des Gefäßes aufliegt. Vielmehr kann das Küchengerät 10 auch schräg aufgesetzt bzw. gezielt aus einer geraden in eine schräge Lage geschoben werden. Dies kann stufenlos erfolgen und eine solche außermittige Lage ist beispielhaft in der Fig. 6 gezeigt. In dieser Schräglage ergibt sich zwischen dem Öffnungsrand 31 des Gefäßes 30 und der Kontaktfläche 40 am Rand 16 des Küchengerätes 10 ein Ausgussspalt 50, durch den beispielsweise Flüssigkeit aus dem Gefäß 30 abgegossen werden kann. Dabei sitzt das Küchengerät 10 aber durch seinen vorzugsweise kugelabschnittsförmigen Grundkörper so sicher auf dem restlichen Rand des Gefäßes 30 auf, dass es nicht verrutscht und die Breite des Spaltes 50 problemlos konstant gehalten werden kann. Gegebenenfalls kann das Küchengerät 10 dabei ein wenig seitlich mit dem Daumen auf den Rand 31 des Gefäßes gedrückt werden.

### Bezugszeichenliste:

- 10: Küchengerät
- 11: Erster Teilbereich, gewölbt, kugelabschnittsförmig, kegelförmig
- 12: Zweiter Teilbereich, eben
- 13: Aussparung, Aufnahme
- 14,14': Rastmittel, Rastwulst
- 15: Grundkörper
- 16: Rand des Grundkörpers
- 17: Seitenwand der Aussparung
- 18: Rand der Seitenwand
- 20,20': Funktionseinheit, Verschlussplatte, Reibe
- 21: Schneidklinge
- 30,30': Gefäß, Schüssel, Topf
- 31,31': Öffnungsrand
- 40: Kontaktfläche, Silikonring
- 41,41': Greiflasche
- 50: Ausgussspalt

- α: Winkel zwischen ebenem und schrägem Teilbereich auf konkaver Seite

## Patentansprüche

1. Küchengerät (10) zum Aufsetzen auf Gefäße (30;30') mit im Wesentlichen kreisrunden Öffnungsrand (31;31'), umfassend einen plattenförmigen Grundkörper (15) aus einem ersten Material mit einer Aussparung (13), in welche wenigstens eine Art von Funktionseinheit (20;20') temporär einbringbar ist,
**dadurch gekennzeichnet, dass** der Grundkörper (15) schalenförmig ausgeformt ist, wodurch ein Grundkörper (15) mit einer konkaven und einer konvexen Seite gebildet wird, und dass wenigstens auf der konvexen Seite des schalenförmigen Grundkörpers (15) wenigstens bereichsweise eine Kontaktfläche (40) aus einem zweiten Material angebracht ist, wobei das zweite Material der Kontaktfläche (40) in Kontakt mit dem Material des Gefäßes (30;30') eine größere Reibungskraft bewirkt als das erste Material des Grundkörpers (15).

2. Küchengerät nach Anspruch 1,
**dadurch gekennzeichnet, dass** das erste Material Kunststoff, Keramik oder Metall, insbesondere Edelstahl, ist.

3. Küchengerät nach einem oder beiden der Ansprüche 1 und 2,
**dadurch gekennzeichnet, dass** das zweite Material ein Kunststoff, insbesondere ein Silikonelastomer oder Nitrilkautschuk ist.

4. Küchengerät nach einem oder mehreren der Ansprüche 1 bis 3,
**dadurch gekennzeichnet, dass** der schalenförmige Grundkörper (15) wenigstens in einem ersten Teilbereich (11) gewölbt oder kegelförmig ist, wodurch die konkave und die konvexe Seite des Grundkörpers (15) gebildet werden.

5. Küchengerät nach Anspruch 4,
**dadurch gekennzeichnet, dass** der schalenförmige Grundkörper (15) in dem wenigstens einen ersten Teilbereich (11) kugelabschnittsförmig ist.

6. Küchengerät nach einem oder mehreren der Ansprüche 1 bis 5,
**dadurch gekennzeichnet, dass** der Grundkörper (15) in wenigstens einem zweiten Teilbereich (12) eben ist, wobei der erste Teilbereich (11) diesen ebenen Teilbereich (12) ringförmig umschließt, und dass die Aussparung (13) in dem ebenen Teilbereich (12) ausgeformt ist.

7. Küchengerät nach einem oder mehreren der Ansprüche 1 bis 6,
**dadurch gekennzeichnet, dass** die Aussparung (13) von wenigstens einer Seitenwand (17) umschlossen ist, die auf der konvexen Seite des Grundkörpers (15) herausragt, wobei die wenigstens eine Art von Funktionseinheit (20;20') temporär innerhalb dieser Seitenwand (17) einbringbar ist.

8. Küchengerät nach einem oder mehreren der Ansprüche 1 bis 7,
**dadurch gekennzeichnet, dass** am Grundkörper (15) Mittel (14;14') zum temporären Fixieren von verschiedenen Funktionseinheiten (20;20') vorgesehen sind.

9. Küchengerät nach einem oder mehreren der Ansprüche 4 bis 8,
**dadurch gekennzeichnet, dass** der Umfang des Grundkörpers (15) kreisrund ist und der erste Teilbereich (11) bis an den Umfang des Grundkörpers (15) heranreicht.

10. Küchengerät nach einem oder mehreren der Ansprüche 1 bis 9,
**dadurch gekennzeichnet, dass** auf der konvexen Seite des Grundkörpers (15) mehrere Kontaktflächen getrennt voneinander so angebracht sind, dass sie einen vom ersten Material des Grundkörpers (11) unterbrochenen Ring bilden.

11. Küchengerät nach einem oder mehreren der Ansprüche 1 bis 9,
**dadurch gekennzeichnet, dass** die wenigstens eine Kontaktfläche durch einen durchgehend umlaufenden Ring (40) gebildet wird.

12. Küchengerät nach einem oder mehreren der Ansprüche 1 bis 11,
**dadurch gekennzeichnet, dass** sich die wenigstens eine Kontaktfläche (40) von der konvexen Seite des Grundkörpers (15) über den Rand (16) des Grundkörpers (15) auf die konkave Seite des Grundkörpers (15) erstreckt.

13. Küchengerät nach den Ansprüchen 11 und 12,
**dadurch gekennzeichnet, dass** an dem umlaufenden Ring (40) auf der konkaven Seite des Grundkörpers (15) wenigstens eine Greiflasche (41;41') ausbildet ist, indem der Ring (40) bereichsweise in Richtung Mittelpunkt des Grundkörpers (15) verbreitert ist und/oder eine bereichsweise Verdickung aufweist.

14. Küchengeräte-Set, umfassend ein Küchengerät (10) nach einem oder mehreren der Ansprüche 1 bis 13 und wenigstens eine Funktionseinheit (20;20'), welche temporär in die Aussparung (13) des Küchengerätes (10) einbringbar ist.

15. Küchengeräte-Set nach Anspruch 14,
**dadurch gekennzeichnet, dass** die Funktionseinheit eine Reibe (20'), ein Hobel, eine Tropfautomatik, ein Dampfeinsatz, eine Saftpresse und/oder eine Verschlussplatte (20) ist.

## Claims

1. A kitchen appliance (10) for placement on vessels (30; 30') having a substantially circular opening edge (31; 31'), comprising a plate-shaped base body (15) made of a first material having a recess (13) into which at least one type of functional unit (20; 20') can be temporarily introduced,
**characterized in that** the base body (15) is formed to have a bowl-like shape whereby a base body (15) having a concave and a convex side is formed, and that at least on the convex side of the bowl-shaped base body (15), a contact surface (40) made of a second material is attached at least in some sections, wherein the second material of the contact surface (40) causes a greater frictional force in contact with the material of the vessel (30; 30') than the first material of the base body (15).

2. The kitchen appliance according to claim 1,
the first material is plastic, ceramics or metal, in particular stainless steel.

3. The kitchen appliance according to any one or both of the claims 1 and 2,
the second material is a plastic, in particular a silicone elastomer or a nitrile rubber.

4. The kitchen appliance according to any one or more of the claims 1 to 3,
**characterized in that** the bowl-shaped base body (15) is domed or cone-shaped in at least a first partial area (11), whereby the concave and the convex side of the base body (15) are formed.

5. The kitchen appliance according to claim 4,
**characterized in that** the bowl-shaped base body (15) is spherical segment-shaped in the at least one first partial area (11).

6. The kitchen appliance according to any one or more of the claims 1 to 5,
**characterized in that** the base body (15) is flat in at least a second partial area (12), wherein the first partial area (11) encloses this flat partial area (12) in a ring-shaped manner, and that the recess (13) is formed in the flat partial area (12).

7. The kitchen appliance according to any one or more of the claims 1 to 6,
**characterized in that** the recess is enclosed (13) by at least one side wall (17), which protrudes on the convex side of the base body (15), wherein the at least one type of functional unit (20; 20') can be temporarily introduced within this side wall (17).

8. The kitchen appliance according to any one or more of the claims 1 to 7,
**characterized in that** means (14; 14') for temporarily fixing different functional units (20; 20') are provided on the base body (15).

9. The kitchen appliance according to any one or more of the claims 4 to 8,
**characterized in that** the circumference of the base body (15) is circular and the first partial area (11) reaches all the way to the circumference of the base body (15).

10. The kitchen appliance according to any one or more of the claims 1 to 9,
**characterized in that** a several contact surfaces are attached separated from one another on the convex side of the base body (15) in such a way that they form a ring, which is interrupted by the first material of the base body (11).

11. The kitchen appliance according to any one or more of the claims 1 to 9,
**characterized in that** the at least one contact surface is formed by a continuously circumferential ring (40).

12. The kitchen appliance according to any one or more of the claims 1 to 11,
**characterized in that** the at least one contact surface (40) extends from the convex side of the base body (15) beyond the edge (16) of the base body (15) to the concave side of the base body (15).

13. The kitchen appliance according to the claims 11 and 12,
**characterized in that** at least one gripping tab (41; 41') is formed on the circumferential ring (40) on the concave side of the base body (15), by the ring (40) being widened in some sections towards the center point of the base body (15) and/or having a thickened portion in some sections.

14. A kitchen appliance set, comprising a kitchen appliance (10) according to one or more of the claims 1 to 13 and at least one functional unit (20; 20'), which can be temporarily introduced into the recess (13) of the kitchen appliance (10).

15. The kitchen appliance set according to claim 14,
**characterized in that** the functional unit is a grater (20'), a slicer, an automatic drip system, a steamer insert, a juice extractor and/or a closing plate (20).

## Revendications

1. Ustensile de cuisine (10) destiné à être posé sur des récipients (30; 30') ayant un bord d'ouverture sensiblement circulaire (31; 31'), comprenant un corps de base en forme de plaque (15) en un premier matériau ayant un évidement (13) dans lequel au moins un type d'unité fonctionnelle (20; 20') peut être insérée temporairement,
**caractérisé par le fait que** le corps de base (15) est formée en forme de coupe, un corps de base (15) ayant une face concave et une face convexe étant formé ainsi, et qu'une surface de contact (40) en un deuxième matériau est appliquée, au moins par zones, au moins sur la face convexe du corps de base (15) en forme de coupe, dans lequel le deuxième matériau de la surface de contact (40) produit, en contact avec le matériau du récipient (30; 30'), une plus grande force de frottement que le premier matériau du corps de base (15).

2. Ustensile de cuisine selon la revendication 1, **caractérisé par le fait que** le premier matériau est de la matière plastique, de la céramique ou du métal, en particulier de l'acier inoxydable.

3. Ustensile de cuisine selon l'une ou les deux des revendications 1 et 2, **caractérisé par le fait que** le deuxième matériau est une matière plastique, en particulier un élastomère de silicone ou du caoutchouc nitrile.

4. Ustensile de cuisine selon l'une ou plusieurs des revendications 1 à 3, **caractérisé par le fait que** le corps de base (15) en forme de coupe est bombée ou en forme de cône au moins dans une première zone partielle (11), les faces concave et convexe du corps de base (15) étant formées ainsi.

5. Ustensile de cuisine selon la revendication 4, **caractérisé par le fait que** le corps de base (15) en forme de coupe présente une forme de segment sphérique dans ladite au moins une première zone partielle (11).

6. Ustensile de cuisine selon l'une ou plusieurs des revendications 1 à 5, **caractérisé par le fait que** le corps de base (15) est plan dans au moins une deuxième zone partielle (12), la première zone partielle (11) entourant de façon annulaire cette zone partielle plane (12), et que ledit évidement (13) est formé dans la zone partielle plane (12).

7. Ustensile de cuisine selon l'une ou plusieurs des revendications 1 à 6, **caractérisé par le fait que** ledit évidement (13) est entouré d'au moins une paroi latérale (17) qui fait saillie sur la face convexe du corps de base (15), dans lequel ledit au moins un type d'unité fonctionnelle (20; 20') peut être insérée temporairement à l'intérieur de cette paroi latérale (17).

8. Ustensile de cuisine selon l'une ou plusieurs des revendications 1 à 7, **caractérisé par le fait que** des moyens (14; 14') pour la fixation temporaire d'unités fonctionnelles (20, 20') différentes sont prévus sur le corps de base (15).

9. Ustensile de cuisine selon l'une ou plusieurs des revendications 4 à 8, **caractérisé par le fait que** la circonférence du corps de base (15) est circulaire et la première zone partielle (11) s'étend jusqu'à la circonférence du corps de base (15).

10. Ustensile de cuisine selon l'une ou plusieurs des revendications 1 à 9, **caractérisé par le fait que** sur la face convexe du corps de base (15) sont appliquées plusieurs surfaces de contact de manière séparée les unes des autres de telle sorte qu'elles forment un anneau interrompu par le premier matériau du corps de base (15).

11. Ustensile de cuisine selon l'une ou plusieurs des revendications 1 à 9, **caractérisé par le fait que** ladite au moins une surface de contact est formée par un anneau (40) s'étendant tout autour de façon continue.

12. Ustensile de cuisine selon l'une ou plusieurs des revendications 1 à 11, **caractérisé par le fait que** ladite au moins une surface de contact (40) s'étend depuis la face convexe du corps de base (15) jusque sur la face concave du corps de base (15) en passant par le bord (16) du corps de base (15).

13. Ustensile de cuisine selon les revendications 11 et 12, **caractérisé par le fait que** sur ledit anneau (40) périphérique, sur la face concave du corps de base (15), est réalisée au moins une languette de préhension (41; 41') **par le fait que** l'anneau (40) est élargi par zones en direction du point central du corps de base (15) et/ou présente un épaississement localisé.

14. Kit d'ustensile de cuisine, comprenant un ustensile de cuisine (10) selon l'une ou plusieurs des revendications 1 à 13 et au moins une unité fonctionnelle (20; 20') qui peut être insérée temporairement dans l'évidement (13) de l'ustensile de cuisine (10).

15. Kit d'ustensile de cuisine selon la revendication 14, **caractérisé par le fait que** ladite unité fonctionnelle est une râpe (20'), une mandoline, un équipement goutte-à-goutte automatique, un insert de cuisson à la vapeur, un presse-fruits et/ou une plaque de fermeture (20).
